# EUROPÄISCHE PATENTSCHRIFT

(11) **EP 3 307 575 B1**
(45) Veröffentlichungstag und Bekanntmachung des Hinweises auf die Patenterteilung: **27.10.2021**
(21) Anmeldenummer: 16731072.1
(22) Anmeldetag: 10.06.2016
(51) Int. Cl.: B60J 1/02, G02B 27/01

(54) **PROJEKTIONSANORDNUNG FÜR EIN HEAD-UP-DISPLAY (HUD)**
PROJECTION DEVICE FOR A HEADS-UP DISPLAY (HUD)
SYSTÈME DE PROJECTION POUR UN ÉCRAN TÊTE HAUTE (HUD)

(30) Priorität: 11.06.2015 EP 15171630
(43) Veröffentlichungstag der Anmeldung: 18.04.2018
(73) Patentinhaber: SAINT-GOBAIN GLASS FRANCE, 92400 Courbevoie (FR)
(72) Erfinder: ARNDT, Martin, 52066 Aachen (DE); GOSSEN, Stefan, 52072 Aachen (DE)
(74) Vertreter: Gebauer, Dieter Edmund
(86) Internationale Anmeldenummer: PCT/EP2016/063407
(87) Internationale Veröffentlichungsnummer: WO 2016/198679

(56) Entgegenhaltungen:
- WO-A1-2009/071135
- DE-A1-102007 059 323
- US-A- 5 504 622
- US-A1- 2012 094 084
- US-A1- 2014 011 000

## Beschreibung

Die Erfindung betrifft eine Projektionsanordnung, ein Verfahren zu deren Herstellung sowie deren Verwendung als Head-Up-Display.

Moderne Automobile werden in zunehmendem Maße mit sogenannten Head-Up-Displays (HUDs) ausgestattet. Mit einem Projektor, beispielsweise im Bereich des Armaturenbretts oder im Dachbereich, werden Bilder auf die Windschutzscheibe projiziert, dort reflektiert und vom Fahrer als virtuelles Bild (von ihm aus gesehen) hinter der Windschutzscheibe wahrgenommen. So können wichtige Informationen in das Blickfeld des Fahrers projiziert werden, beispielsweise die aktuelle Fahrtgeschwindigkeit, Navigations- oder Warnhinweise, die der Fahrer wahrnehmen kann, ohne seinen Blick von der Fahrbahn wenden zu müssen. Head-Up-Displays können so wesentlich zur Steigerung der Verkehrssicherheit beitragen. Bei den vorstehend beschriebenen Head-Up-Displays tritt das Problem auf, dass das Projektorbild an beiden Oberflächen der Windschutzscheibe reflektiert wird. Dadurch nimmt der Fahrer nicht nur das gewünschte Hauptbild wahr, sondern auch ein leicht versetztes, in der Regel intensitätsschwächeres Nebenbild. Letzteres wird gemeinhin auch als Geisterbild bezeichnet. Dieses Problem wird bekanntermaßen dadurch gelöst, dass die reflektierenden Oberflächen mit einem bewusst gewählten Winkel zueinander angeordnet werden, so dass Hauptbild und Geisterbild überlagert werden, wodurch das Geisterbild nicht mehr störend auffällt. Der Winkel beträgt bei herkömmlichen Verbundgläsern für Head-Up-Displays typischerweise etwa 0,5 mrad.

Windschutzscheiben bestehen aus zwei Glasscheiben, welche über eine thermoplastische Folie miteinander laminiert sind. Sollen die Oberflächen der Glasscheiben wie beschrieben in einem Winkel angeordnet werden, so ist es üblich, eine thermoplastische Folie mit nichtkonstanter Dicke zu verwenden. Man spricht auch von einer keilförmigen Folie oder Keilfolie. Der Winkel zwischen den beiden Oberflächen der Folie wird als Keilwinkel bezeichnet. Verbundgläser für Head-Up-Displays mit Keilfolien sind beispielsweise aus EP1800855B1 oder EP1880243A2 bekannt.

Im einfachen Fall ist der Keilwinkel über die gesamte Folie konstant (lineare Dickenänderung). Dies hat den Nachteil, dass der Keilwinkel auf eine einzige Sichtposition (sogenannte Augposition) optimiert ist. Befinden sich die Augen des realen Fahrers an einer anderen Position, beispielsweise infolge einer anderen Körpergröße, ist die Kompensation des Geisterbildes nicht mehr optimal. Dies kann dadurch verbessert werden, dass anstelle eines konstanten Keilwinkels ein im vertikalen Verlauf veränderlicher Keilwinkel gewählt wird (nichtlineare Dickenänderung), wie beispielsweise aus DE102007059323A1 bekannt ist. Der Keilwinkel nimmt dabei (zumindest im HUD-Bereich) von oben nach unten zu.

Neben dem Geisterbild in Reflexion tritt bei Windschutzscheiben ein weiterer unerwünschter Effekt auf. Durch das Brechungsverhalten der beiden Glasscheiben können auch durch die Scheibe hindurch betrachtete Objekte als doppeltes Bild erscheinen. Dieser Effekt in Transmission wird gemeinhin als Doppelbild bezeichnet. Auch das Doppelbild lässt sich durch einen nichtlinearen Keilwinkel verringern, wie aus DE102008008758A1 bekannt ist. Das hierfür erforderliche Keilwinkel-Profil ist jedoch demjenigen zur Vermeidung des Geisterbilds genau entgegengesetzt (Abnahme des Keilwinkels von oben nach unten). Die Anforderungen zur Kompensation von Geisterbild und Doppelbild stehen sich gleichsam entgegen. Ein Keilwinkel-Profil, welches auf die Vermeidung von Geisterbildern optimiert ist, kann daher den Effekt des Doppelbilds verstärken.

WO 2009/071135 A1 zeigt eine Ausgestaltung einer Windschutzscheibe, bei der Doppelbilder in Transmission minimiert werden, wobei der Scheibenkrümmungsradius zur dachseitigen Scheibenkante hin zunimmt. Bei einer weiteren Ausgestaltung der Windschutzscheibe werden Geisterbilder in Reflexion in einem HUD-Bereich minimiert, wobei der Scheibenkrümmungsradius zur dachseitigen Scheibenkante hin zunimmt

Der Erfindung liegt die Aufgabe zugrunde, eine verbesserte Projektionsanordnung für ein Head-Up-Display (HUD) bereitzustellen, wobei sowohl Geisterbilder der HUD-Projektion als auch Doppelbilder in Transmission in verringertem Maße auftreten.

Die Aufgabe der vorliegenden Erfindung wird erfindungsgemäß durch eine Projektionsanordnung gemäß Anspruch 1 gelöst. Bevorzugte Ausführungen gehen aus den Unteransprüchen hervor.

Die erfindungsgemäße Projektionsanordnung für ein Head-Up-Display (HUD) umfasst mindestens eine Fahrzeug-Windschutzscheibe (insbesondere eines Kraftfahrzeugs, beispielsweise eines Personenkraftwagens) und einen Projektor. Wie bei HUDs üblich bestrahlt der Projektor einen Bereich der Windschutzscheibe, wo die Strahlung in Richtung des Betrachters (Fahrers) reflektiert wird, wodurch ein virtuelles Bild erzeugt wird, welches der Betrachter von ihm aus gesehen hinter der Windschutzscheibe wahrnimmt. Der durch den Projektor bestrahlbare Bereich der Windschutzscheibe wird als HUD-Bereich bezeichnet. Der Projektor ist auf den HUD-Bereich gerichtet. Die Strahlrichtung des Projektors kann typischerweise durch Spiegel variiert werden, insbesondere vertikal, um die Projektion an die Körpergröße des Betrachters anzupassen. Der Bereich, in dem sich die Augen des Betrachters bei gegebener Spiegelstellung befinden müssen, wird als Eyeboxfenster bezeichnet. Dieses Eyeboxfenster kann durch Verstellung der Spiegel vertikal verschoben werden, wobei der gesamte dadurch zugängliche Bereich (das heißt die Überlagerung aller möglichen Eyeboxfenster) als Eyebox bezeichnet wird. Ein innerhalb der Eyebox befindlicher Betrachter kann das virtuelle Bild wahrnehmen. Damit ist natürlich gemeint, dass sich die Augen des Betrachters innerhalb der Eyebox befinden müssen, nicht etwa der gesamte Körper.

Die hier verwendeten Fachbegriffe aus dem Bereich der HUDs sind dem Fachmann allgemein bekannt. Für eine ausführliche Darstellung sei auf die Dissertation "Simulationsbasierte Messtechnik zur Prüfung von Head-Up Displays" von Alexander Neumann am Institut für Informatik der Technischen Universität München (München: Universitätsbibliothek der TU München, 2012) verwiesen, insbesondere auf Kapitel 2 "Das Head-Up Display".

Die Windschutzscheibe umfasst eine Außenscheibe und eine Innenscheibe, die über eine thermoplastische Zwischenschicht miteinander verbunden sind. Die Windschutzscheibe ist dafür vorgesehen, in einer Fensteröffnung eines Fahrzeugs den Innenraum gegenüber der äußeren Umgebung abzutrennen. Mit Innenscheibe wird im Sinne der Erfindung die dem Innenraum (Fahrzeuginnenraum) zugewandte Scheibe der Verbundscheibe bezeichnet. Mit Außenscheibe wird die der äußeren Umgebung zugewandte Scheibe bezeichnet.

Die Windschutzscheibe weist eine Oberkante und eine Unterkante auf. Mit Oberkante wird diejenige Seitenkante bezeichnet, welche dafür vorgesehen ist, in Einbaulage nach oben zu weisen. Mit Unterkante wird diejenige Seitenkante bezeichnet, welche dafür vorgesehen ist, in Einbaulage nach unten zu weisen. Die Oberkante wird häufig auch als Dachkante und die Unterkante als Motorkante bezeichnet.

Der Strahl, der zwischen dem Projektor und der Mitte der Eyebox verläuft, wird gemeinhin als Mittenstrahl bezeichnet. Er ist ein charakteristischer Bezugsstrahl für die Konzeption einer HUD-Projektionsanordnung. Der Punkt, an dem der Mittenstrahl auf die Innenscheibe trifft, wird im Sinne der Erfindung als HUD-Referenzpunkt bezeichnet. Der HUD-Referenzpunkt liegt innerhalb des HUD-Bereichs, typischerweise in etwa mittig.

Die Dicke der Zwischenschicht ist im vertikalen Verlauf zwischen der Oberkante und der Unterkante der Windschutzscheibe zumindest abschnittsweise veränderlich. Mit "abschnittsweise" ist hier gemeint, dass der vertikale Verlauf zwischen Oberkante und Unterkante zumindest einen Abschnitt aufweist, in dem sich die Dicke der Zwischenschicht ortsabhängig ändert, die Zwischenschicht also einen Keilwinkel aufweist. Die Dicke der Zwischenschicht ist mindestens im HUD-Bereich veränderlich. Die Dicke kann sich aber auch in mehreren Abschnitten ändern oder im gesamten vertikalen Verlauf, beispielsweise von der Unterkante zur Oberkante monoton zunehmen. Mit vertikalem Verlauf ist der Verlauf zwischen Oberkante und Unterkante mit Verlaufsrichtung im Wesentlichen senkrecht zur Oberkante bezeichnet. Da die Oberkante bei Windschutzscheiben stark von einer Geraden abweichen kann, ist der vertikale Verlauf präziser ausgedrückt senkrecht zur Verbindungslinie zwischen den Ecken der Oberkante ausgerichtet. Die Zwischenschicht weist zumindest abschnittsweise einen endlichen Keilwinkel auf, also einen Keilwinkel größer 0°, nämlich in dem Abschnitt, in dem die Dicke veränderlich ist.

Mit Keilwinkel wird der Winkel zwischen den beiden Oberflächen der Zwischenschicht bezeichnet. Ist der Keilwinkel nicht konstant, so sind zu seiner Messung an einem Punkt die Tangenten an die Oberflächen heranzuziehen.

Der Keilwinkel ist zumindest im HUD-Bereich veränderlich. Bevorzugt nimmt der Keilwinkel im vertikalen Verlauf von der Oberkante des HUD-Bereichs zur Unterkante des HUD-Bereichs monoton zu. Mit einem solchen Keilwinkelprofil können Geisterbilder infolge von Doppelreflexion des Projektorbildes wirksam für verschiedene Augpositionen vermieden werden.

Der Erfindung liegt die Erkenntnis zugrunde, dass der unerwünschte Effekt des Doppelbilds und dessen Verstärkung durch den variablen Keilwinkel entscheidend mit den Krümmungsradien der Scheibe zusammenhängen. Windschutzscheiben weisen typischerweise einen vertikalen Krümmungsradius auf, welcher im vertikalen Verlauf zwischen der Oberkante und der Unterkante veränderlich ist. Der vertikale Krümmungsradius bezieht sich dabei auf die Krümmung in der vertikalen Dimension der Scheibe zwischen Oberkante und Unterkante. Große Krümmungsradien entsprechen einer schwachen Krümmung, kleine Krümmungsradien einer starken Krümmung der Scheibe. Bei typischen, herkömmlichen Windschutzscheiben steigt der vertikale Krümmungsradius im vertikalen Verlauf von der Oberkante aus Richtung Unterkante an.

Die Erfinder haben nun überraschend erkannt, dass dieser typische Verlauf der Krümmungsradien mit der Verstärkung des Doppelbilds durch den veränderlichen Keilwinkel in Zusammenhang steht und dass es möglich ist, die Effekte von Geisterbild und Doppelbild gleichsam zu entkoppeln, indem das Maximum des Krümmungsradius im Vergleich zur herkömmlichen Scheibe nach oben verschoben wird, mindestens bis über den HUD-Referenzpunkt.

Die erfindungsgemäße Windschutzscheibe weist daher einen vertikalen Krümmungsradius auf, welcher im vertikalen Verlauf zwischen der Oberkante und der Unterkante veränderlich ist. Dieser vertikale Verlauf, entlang dessen die Krümmungsradien bestimmt werden, wird so gewählt, dass er durch den HUD-Referenzpunkt läuft.

Betrachtet man nun den Abschnitt dieses vertikalen Verlaufs zwischen der Oberkante der Windschutzscheibe und der Unterkante des HUD-Bereichs (also derjenigen Seitenkante des HUD-Bereichs, die der Unterkante der Windschutzscheibe zugewandt ist), so ist das Maximum des vertikalen Krümmungsradius in diesem Abschnitt oberhalb des HUD-Referenzpunkts befindlich. Mit "oberhalb" ist dabei gemeint, dass das Maximum näher an der Oberkante der Windschutzscheibe liegt als der HUD-Referenzpunkt. Die flachste Stelle der Scheibe liegt also oberhalb des HUD-Referenzpunkts.

Das Maximum des Krümmungsradius im gesamten vertikalen Verlauf durch den HUD-Referenzpunkt liegt oberhalb des HUD-Referenzpunktes. Bei realen Scheiben können jedoch im unteren Randbereich sehr flache Stellen auftreten, die typischerweise auf Biegefehler zurückzuführen sind. Diese beeinflussen jedoch die Funktion der Erfindung nicht. Daher genügt es, das Maximum im Abschnitt zwischen Unterkante des HUD-Bereichs und Oberkante der Windschutzscheibe zu bestimmen.

In einer bevorzugten Ausgestaltung ist das Maximum des vertikalen Krümmungsradius oberhalb des HUD-Bereichs befindlich. Damit werden besonders gute Ergebnisse hinsichtlich der Vermeidung von Doppelbildern erzielt. Diese Variante kann auch für die Konzeption vorteilhaft sein, weil der HUD-Referenzpunkt nicht bekannt sein muss oder bestimmt werden muss. Der Unterschied zwischen dem maximalen Krümmungsradius und dem Krümmungsradius an der Oberkante des HUD-Bereichs beträgt in diesem Fall bevorzugt von 0,5 m bis 2 m, besonders bevorzugt von 1 m bis 1,5 m.

Erfindungsgemäß ist der vertikale Krümmungsradius an der Oberkante des HUD-Bereichs größer als an der Unterkante des HUD-Bereichs und nimmt zwischen der Oberkante und der Unterkante monoton ab.

In einer besonders bevorzugten Ausgestaltung ist das Maximum des vertikalen Krümmungsradius an oder oberhalb der oberen Kante des A-Sichtfelds gemäß ECE-R43 befindlich. Damit werden besonders gute Ergebnisse erzielt.

Der (veränderliche) Keilwinkel beträgt im HUD-Bereich bevorzugt von 0,05 mrad bis 2 mrad, besonders bevorzugt von 0,1 mrad bis 1 mrad, insbesondere von 0,3 mrad bis 0,8 mrad. Damit werden bei typischen Head-Up-Displays gute Ergebnisse hinsichtlich der Unterdrückung des Geisterbilds erreicht.

In einer vorteilhaften Ausgestaltung beträgt der vertikale Krümmungsradius im HUD-Bereich von 6 m bis 10 m, bevorzugt von 7 m bis 9 m. Damit können Doppelbilder besonders wirksam vermieden werden.

Das Maximum des vertikalen Krümmungsradius beträgt bevorzugt von 8 m bis 10 m.

Die vertikalen Krümmungsradien der gesamten Windschutzscheibe liegen bevorzugt im Bereich von 1 m bis 40 m, besonders bevorzugt 2 m bis 15 m, insbesondere 3 m bis 13 m.

Der Einbauwinkel der Windschutzscheibe liegt typischerweise im Bereich von 55° bis 75° zur Horizontalen, insbesondere von 58° bis 72°. Bei diesen Einbauwinkeln sind die erfindungsgemäßen Keilwinkel ohne Probleme realisierbar. In einer besonders vorteilhaften Ausgestaltung beträgt der Einbauwinkel von 60° bis 68° zur Horizontalen, bevorzugt 63° bis 67°. Damit können besonders kleine Keilwinkel der Zwischenschicht erreicht werden.

Der Einstrahlwinkel des Mittenstrahls an der Windschutzscheibe liegt vorzugsweise im Bereich von 50° bis 75°, besonders bevorzugt im Bereich von 60° bis 70° und beträgt beispielsweise 65°. Der Einstrahlwinkel bemißt sich zur Richtung der Normalen auf die Windschutzscheibe.

Der HUD-Bereich ist bei einem kontaktanalogen HUD typischerweise größer als bei einem klassischen statischen HUD. In einer bevorzugten Ausgestaltung beträgt die Fläche des erfindungsgemäßen HUD-Bereichs mindestens 7 % der Fläche der Windschutzscheibe, besonders bevorzugt mindestens 8 %. Die Fläche des HUD-Bereichs eines statischen HUDs beträgt typischerweise höchstens 4-5 % der Fläche der Windschutzscheibe. Beispielsweise beträgt die Fläche des HUD-Bereichs von 40 000 mm² bis 125 000 mm². Die Außenscheibe und die Innenscheibe enthalten bevorzugt Glas, insbesondere Kalk-Natron-Glas. Die Scheiben können aber grundsätzlich auch andere Glassorten enthalten, wie Quarzglas oder Borosilikatglas, oder auch starre klare Kunststoffe, insbesondere Polycarbonat oder Polymethylmethacrylat. Die Dicke der Außenscheibe und der Innenscheibe kann breit variieren. Vorteilhaft haben die Einzelscheiben jeweils eine Dicke, die maximal 5 mm, vorzugsweise maximal 3 mm beträgt. Vorzugsweise werden Scheiben mit einer Dicke im Bereich von 0,8 mm bis 5 mm, bevorzugt von 1,4 mm bis 2,5 mm verwendet, beispielsweise die mit den Standarddicken 1,6 mm oder 2,1 mm.

Die thermoplastische Zwischenschicht enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt PVB. Die minimale Dicke der thermoplastischen Verbindungsfolie beträgt bevorzugt von 0,2 mm bis 2 mm, besonders bevorzugt von 0,3 mm bis 1 mm. Mit minimaler Dicke wird die Dicke an der dünnsten Stelle der Zwischenschicht bezeichnet. Die thermoplastische Zwischenschicht wird durch mindestens eine thermoplastische Verbindungsfolie mit variabler Dicke ausgebildet, eine sogenannte Keilfolie mit zumindest abschnittweise veränderlichem Keilwinkel.

Die Dicke der Zwischenschicht kann in horizontalen Schnitten (das heißt Schnitte etwa parallel zu Oberkante und Unterkante) konstant sein. Dann ist das Dickenprofil über die Breite des Verbundglases konstant. Die Dicke kann aber auch in horizontalen Schnitten veränderlich sein. Dann ist die Dicke nicht nur im vertikalen, sondern auch im horizontalen Verlauf veränderlich.

Die Zwischenschicht kann durch eine einzelne Folie ausgebildet sein oder auch durch mehr als eine Folie. In letzterem Fall muss mindestens eine der Folien mit dem Keilwinkel ausgebildet sein. Die Zwischenschicht kann auch aus einer sogenannten akustischen Folie ausgebildet sein, welche eine geräuschdämpfende Wirkung hat, oder eine solche Folie enthalten. Solche Folien bestehen typischerweise aus mindestens drei Lagen, wobei die mittlere Lage eine höhere Plastizität oder Elastizität aufweist als die sie umgebenden äußeren Lagen, beispielsweise infolge eines höheren Anteils an Weichmachern.

Die Außenscheibe, die Innenscheibe und die thermoplastische Zwischenschicht können klar und farblos, aber auch getönt oder gefärbt sein. Die Gesamttransmission durch das Verbundglas beträgt in einer bevorzugten Ausgestaltung größer 70%. Der Begriff Gesamttransmission bezieht sich auf das durch ECE-R 43, Anhang 3, § 9.1 festgelegte Verfahren zur Prüfung der Lichtdurchlässigkeit von Kraftfahrzeugscheiben.

Das erfindungsgemäße Windschutzscheibe kann eine funktionelle Beschichtung aufweisen, beispielweise eine IR-reflektierende oder absorbierende Beschichtung, eine UVreflektierende oder absorbierende Beschichtung, eine Beschichtung niedriger Emissivität, eine heizbare Beschichtung. Die funktionelle Beschichtung kann auf der Außenscheibe oder der Innenscheibe angeordnet sein. Die funktionelle Beschichtung ist bevorzugt auf der zur thermoplastischen Zwischenschicht hingewandten Oberfläche der Scheibe angeordnet, wo sie vor Korrosion und Beschädigung geschützt ist. Die funktionelle Beschichtung kann auch auf einer Einlagefolie in der Zwischenschicht, beispielsweise aus Polyethylenterephthalat (PET), angeordnet sein.

Die Erfindung umfasst außerdem ein Verfahren zur Herstellung einer Projektionsanordnung für ein HUD, wobei die Projektionsanordnung umfasst:
- eine Fahrzeug-Windschutzscheibe, enthaltend eine Außenscheibe und eine Innenscheibe, die über eine thermoplastische Zwischenschicht miteinander verbunden sind, mit einer Oberkante und einer Unterkante und einem HUD-Bereich, wobei die Dicke der thermoplastischen Zwischenschicht im vertikalen Verlauf zwischen der Oberkante und der Unterkante zumindest abschnittsweise veränderlich ist mit einem Keilwinkel, wobei der Keilwinkel zumindest im HUD-Bereich veränderlich ist; und
- einen Projektor, der auf den HUD-Bereich gerichtet ist und ein virtuelles Bild erzeugt, das ein innerhalb einer Eyebox befindlicher Betrachter wahrnehmen kann.

Das erfindungsgemäße Verfahren ist im Anspruch 12 definiert.

Der besondere Vorteil des Verfahrens liegt darin, dass bei der Konzeption der Projektionsanordnung das Krümmungsprofil der Windschutzscheibe einbezogen wird.

Die Dicken der Scheiben sowie die Einbaulage stehen typischerweise bei der Konzeption des HUDs bereits fest. Auf dieser Grundlage kann auch theoretisch ein Keilwinkelverlauf bestimmt werden, so dass Geisterbilder optimal minimiert werden. Die Ermittlung des Keilwinkelverlaufs erfolgt durch fachübliche Simulationen.

Ferner muss die relative Anordnung zwischen Windschutzscheibe und Projektor festgelegt sein. Daraus ergibt sich die Position der Eyebox. Aus diesen Daten kann der Mittenstrahl sowie der HUD-Referenzpunkt ermittelt werden.

Ist der HUD-Referenzpunkt bestimmt, so wird das Profil des vertikalen Krümmungsprofils erfindungsgemäß bestimmt. Da das Krümmungsprofil auch Auswirkungen auf das Geisterbild haben kann, kann zu diesem Zeitpunkt eine Anpassung der Keilwinkel nötig sein. Die endgültige Bestimmung der Scheibengeometrie mit Keilwinkelprofil und Krümmungsprofil kann iterativ erfolgen, bis Geister- und Doppelbildproblematik minimiert sind.

Alle bislang beschriebenen Schritte erfolgen typischerweise in der Konzeptionsphase, typischerweise anhand der CAD-Daten der Fahrzeugs. Nachdem die endgültige Scheibengeometrie festgelegt wurde, kann die Scheibe hergestellt werden.

Die thermoplastische Zwischenschicht wird als Folie bereitgestellt. Der Keilwinkel kann durch Recken einer Folie mit (im Ausgangszustand) im Wesentlichen konstanter Dicke oder durch Extrusion mittels einer keilförmigen Extrusionsdüse in die Folie eingebracht werden.

Die Außenscheibe und die Innenscheibe werden vor der Lamination einem Biegeprozess unterzogen entsprechend dem ermittelten Krümmungsprofil. Bevorzugt werden die Außenscheibe und die Innenscheibe gemeinsam (d.h. zeitgleich und durch dasselbe Werkzeug) kongruent gebogen, weil dadurch die Form der Scheiben für die später erfolgende Laminierung optimal aufeinander abgestimmt sind. Typische Temperaturen für Glasbiegeprozesse betragen beispielsweise 500°C bis 700°C.

Die Herstellung der Windschutzscheibe erfolgt durch Lamination mit üblichen, dem Fachmann an sich bekannten Methoden, beispielsweise Autoklavverfahren, Vakuumsackverfahren, Vakuumringverfahren, Kalanderverfahren, Vakuumlaminatoren oder Kombinationen davon. Die Verbindung von Außenscheibe und Innenscheibe erfolgt dabei üblicherweise unter Einwirkung von Hitze, Vakuum und/oder Druck.

Anschließend werden Windschutzscheibe und Projektor relativ zueinander angeordnet, typischerweise durch Einbau von Windschutzscheibe und Projektor in die Fahrzeugkarosserie. So entsteht die erfindungsgemäße Projektionsanordnung.

Die Erfindung umfasst außerdem die Verwendung der erfindungsgemäßen Projektionsanordnung in einem Fahrzeug als Head-Up-Display (HUD), bevorzugt in einem Kraftfahrzeug, besonders bevorzugt in einem Personenkraftwagen.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf die Windschutzscheibe einer erfindungsgemäßen Projektionsanordnung,
- Fig. 2: einen Querschnitt durch eine erfindungsgemäße Projektionsanordnung,
- Fig. 3: ein schematisches Diagramm des Verlaufs von Krümmungsradien der erfindungsgemäßen Windschutzscheibe,
- Fig. 4: ein Flussdiagramm einer Ausführungsform des erfindungsgemäßen Verfahrens und
- Fig. 5: ein Diagramm des vertikalen Krümmungsradius und des daraus resultierenden Doppelbildwinkels.

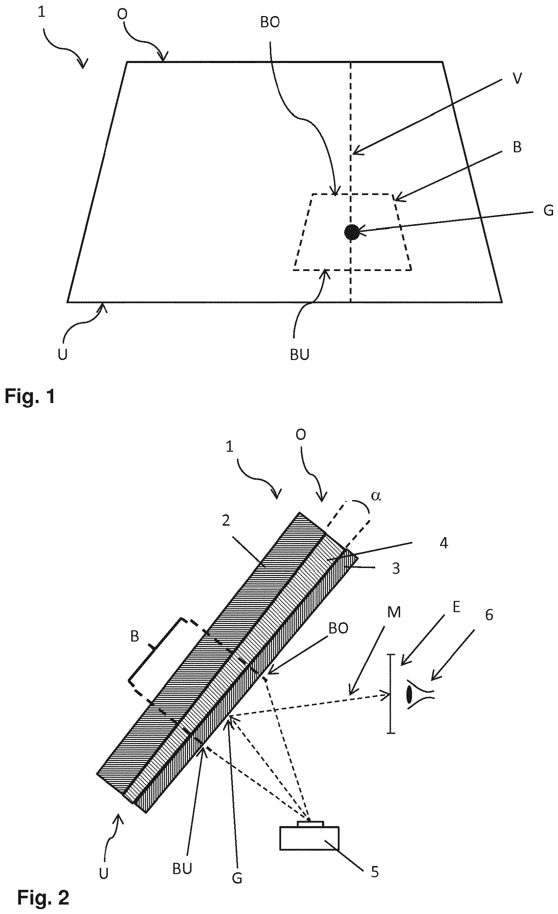

Fig. 1 zeigt eine Draufsicht auf eine Windschutzscheibe 1 einer erfindungsgemäßen Projektionsanordnung. Die Windschutzscheibe 1 hat eine Oberkante O, eine Unterkante U und zwei diese verbindenden Seitenkanten. Die Oberkante O weist in Einbaulage nach oben zum Fahrzeugdach (Dachkante), die Unterkante U nach unten zum Motorraum (Motorkante). Die Windschutzscheibe 1 weist einen HUD-Bereich B auf, welcher in Einbaulage vom HUD-Projektor bestrahlbar ist und im Betrieb bestrahlt wird. Der HUD-Bereich B wird begrenzt durch eine Oberkante (BO), eine Unterkante (BU) und zwei diese verbindenden Seitenkanten. Eingezeichnet sind außerdem der HUD-Referenzpunkt G, der nachstehend genauer erläutert wird, sowie der vertikale Verlauf V zwischen Oberkante O und Unterkante U durch den HUD-Referenzpunkt G.

Fig. 2 zeigt einen Querschnitt durch eine erfindungsgemäße Projektionsanordnung entlang des vertikalen Verlaufs V, umfassend die Windschutzscheibe 1 aus Fig. 1 sowie einen HUD-Projektor 5. Die Windschutzscheibe 1 besteht aus einer Außenscheibe 2 und einer Innenscheibe 3, die über eine thermoplastische Zwischenschicht 4 miteinander verbunden sind. Die Windschutzscheibe trennt den Fahrzeuginnenraum von der äußeren Umgebung, wobei die Außenscheibe 2 in Einbaulage der äußeren Umgebung zugewandt ist, die Innenscheibe 3 dem Fahrzeuginnenraum.

Die Außenscheibe 2 besteht beispielsweise aus Kalk-Natron-Glas mit einer Dicke von 2,1 mm. Die Innenscheibe 3 besteht beispielsweise aus Kalk-Natron-Glas mit einer Dicke von 1,6 mm. Diese Scheiben sind für Windschutzscheiben gebräuchlich. Die Dicke der Zwischenschicht 4 nimmt im vertikalen Verlauf von der Unterkante U zur Oberkante O monoton zu. Die Dickenzunahme ist in der Figur der Einfachheit halber linear dargestellt mit einem konstanten Keilwinkel α zwischen den beiden Oberflächen. Die erfindungsgemäße Zwischenschicht 4 weist allerdings eine komplexere, zumindest abschnittsweise nichtlineare Dickenzunahme mit nicht-konstantem Keilwinkel α auf. Die Zwischenschicht 4 ist aus einer einzelnen Folie aus PVB ausgebildet. Die Dicke der Zwischenschicht 4 an der Oberkante O beträgt beispielsweise 1,25 mm und an der Unterkante U beispielsweise 0,76 mm.

Der Projektor 5 ist auf den HUD-Bereich B gerichtet. In diesem Bereich sollen Bilder durch den Projektor 5 erzeugt werden. Das Projektorbild wird von der Windschutzscheibe 1 in Richtung des Betrachters 6 (Fahrzeugfahrer) reflektiert. Dadurch entsteht ein nicht eingezeichnetes virtuelles Bild vom Betrachter 6 aus gesehen hinter der Windschutzscheibe 1. Die so dargestellten Informationen kann der Betrachter 6 wahrnehmen, ohne seinen Blick von der Fahrbahn nehmen zu müssen.

Durch die keilförmige Ausbildung der Zwischenschicht 4 werden die beiden Bilder, die durch Reflexion des Projektorbildes an den beiden von der Zwischenschicht 4 abgewandten Oberflächen der Außenscheibe 2 und der Innenscheibe 3 erzeugt werden, miteinander überlagert. Störende Geisterbilder treten daher in geringerem Maße auf. Der Keilwinkel α ist zumindest innerhalb des HUD-Bereichs B im vertikalen Verlauf veränderlich und nimmt von der Oberkante BO zur Unterkante BU monoton zu. Der Keilwinkel α beträgt beispielsweise an der Oberkante BO 0,3 mrad, am HUD-Referenzpunkt G 0,5 mrad und an der Unterkante BU 0,8 mrad. Der variable Keilwinkel α ermöglicht die Optimierung der Wirkung (Unterdrückung von Geisterbilden) auf verschiedene Augpositionen, die sich beispielsweise aus verschiedenen Körpergrößen von Fahrern ergeben.

Der Bereich, innerhalb dessen sich die Augen des Betrachters 6 befinden müssen, um das virtuelle Bild wahrzunehmen, wird als Eyeboxfenster bezeichnet. Das Eyeboxfenster ist durch Spiegel im Projektor 5 vertikal verstellbar, um das HUD an Betrachter 6 unterschiedlicher Körpergröße und Sitzposition anpassen zu können. Der gesamte zugängliche Bereich, innerhalb dessen das Eyebox-Fenster verschoben werden kann, wird als Eyebox E bezeichnet. Der Stahl, welche den Projektor 5 mit der Mitte der Eyebox E verbindet (üblicherweise befinden sich die Spiegel des Projektors 5 dabei in Nullstellung) wird als Mittenstrahl M bezeichnet. Der HUD-Referenzpunkt G entspricht dem Punkt auf der Innenscheibe 3, auf den der Mittenstrahl M trifft. Bei der Konzeption von HUD-Projektionsanordnungen ist der Referenzpunkt G eine charakteristische Größe.

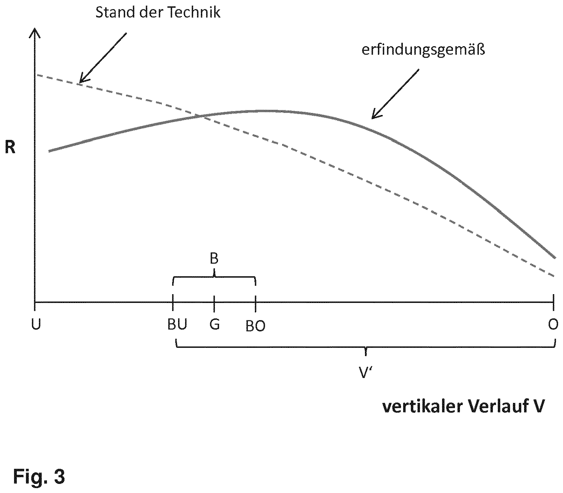

Fig. 3 zeigt einen Vergleich des Profils an vertikalen Krümmungsradien R im vertikalen Verlauf V zwischen Unterkante U und Oberkante O von herkömmlichen Windschutzscheiben und einer Ausgestaltung der erfindungsgemäßen Windschutzscheibe 1. Bei herkömmlichen Windschutzscheiben nimmt der vertikale Krümmungsradius R typischerweise von der Oberkante O zur Unterkante U kontinuierlich zu.

Die erfindungsgemäße Windschutzscheibe 1 zeichnet sich durch einen davon abweichenden Verlauf an vertikalen Krümmungsradien R aus. Betrachtet man einen Abschnitt V' des vertikalen Verlaufs V zwischen Unterkante BU des HUD-Bereichs B und Oberkante O der Windschutzscheibe 1 und bestimmt in diesem Abschnitt V' das Maximum des vertikalen Krümmungsradius R, so liegt dieses Maximum oberhalb des HUD-Referenzpunktes G, das heißt zwischen HUD-Referenzpunkt G und Oberkante O. In der dargestellten bevorzugten Ausgestaltung befindet sich das Maximum oberhalb des HUD-Bereichs B. Im HUD-Bereich B nimmt der Krümmungsradius monoton von der Oberkante BO zur Unterkante BU ab.

Der vertikale Krümmungsradius R beträgt im Maximum beispielsweise 9,5 m und nimmt im HUD-Bereich von 9 m an der Oberkante BO auf 7,5 an der Unterkante BU ab.

Die erfindungsgemäße Projektionsanordnung bezieht erstmals den Verlauf der Krümmungsradien der Windschutzscheibe in die Konzeption eines HUD ein. Der veränderliche, von oben nach unten zunehmende Keilwinkel, der Geisterbilder in Reflexion effektiv reduziert, führt nämlich bislang dazu, dass Doppelbilder in Transmission verstärkt werden. Die Erfinder haben erkannt, dass dieser Effekt durch das Krümmungsprofil herkömmlicher Windschutzscheiben, bei denen die flachste Stelle (maximaler Krümmungsradius) unterhalb des HUD-Bereichs liegt, verstärkt wird. Durch das erfindungsgemäße Krümmungsprofil, bei dem die flachste Stelle oberhalb des HUD-Referenzpunkts G liegt, können Geisterbild und Doppelbild gleichsam voneinander entkoppelt werden und die verstärkende Wirkung des Keilwinkelverlaufs auf das Doppelbild wird verringert. Das ist der große Vorteil der Erfindung.

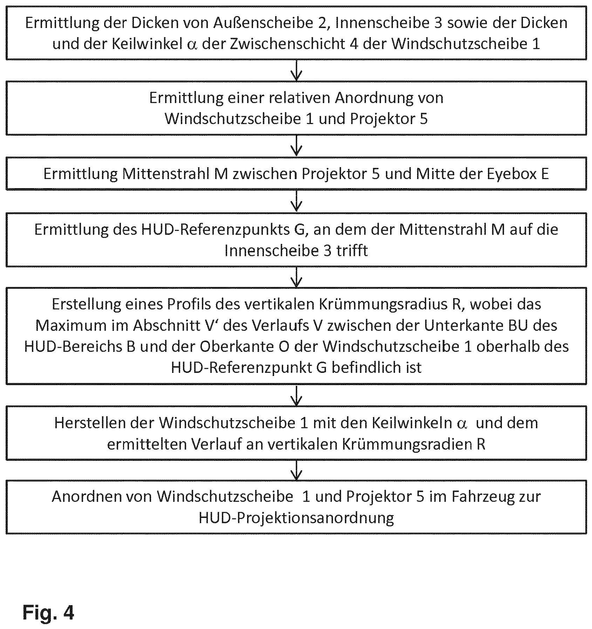

Fig. 4 zeigt ein Flussdiagramm eines Ausführungsbeispiels des erfindungsgemäßen Verfahrens zur Herstellung einer Projektionsanordnung für ein Head-Up-Display.

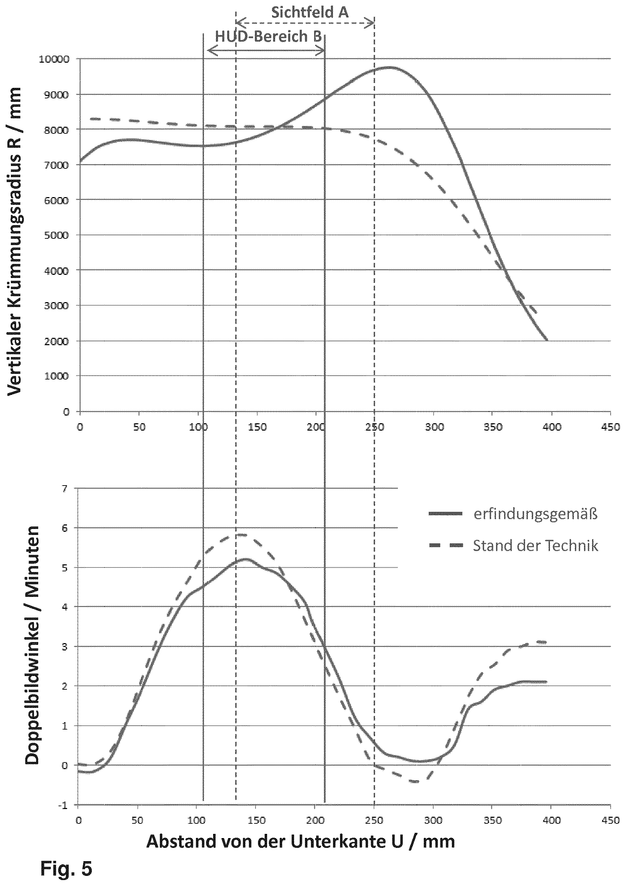

Fig. 5 zeigt ein Schaubild, welches den vorteilhaften Effekt des erfindungsgemäßen Verlaufs an vertikalen Krümmungsradien R demonstriert. Im oberen Diagramm ist der vertikale Verlauf des vertikalen Krümmungsradius R aufgetragen für eine herkömmliche und eine erfindungsgemäße Windschutzscheibe mit jeweils gleich ausgestaltetem veränderlichen Keilwinkel. Während der vertikale Krümmungsradius R nach dem Stand der Technik mit kleiner werdendem Abstand zur Unterkante U stetig ansteigt, weist er im erfindungsgemäßen Beispiel ein Maximum auf, welches oberhalb des HUD-Bereichs B und leicht oberhalb der oberen Kante des A-Sichtfelds nach ECE-R43 befindlich ist.

Die Wirkung ist dem unteren Diagramm zu entnehmen. Der Keilwinkelverlauf ist im HUD-Bereich B zur Vermeidung eines Geisterbildes optimiert, so dass Reflexionen der HUD-Projektion an den verschiedenen Oberflächen miteinander überlagert werden. Dies kann allerdings dazu führen, dass die Doppelbildproblematik verstärkt wird, also durch die Scheibe hindurch betrachtete Objekte verstärkt als doppeltes Bild erscheinen. Im Diagramm ist zu erkennen, dass der Doppelbildwinkel durch den erfindungsgemäßen Verlauf des vertikalen Krümmungsradius R deutlich verringert wird, wodurch das Doppelbild weniger störend ist.

### Bezugszeichenliste:

- (1): Windschutzscheibe
- (2): Außenscheibe
- (3): Innenscheibe
- (4): thermoplastische Zwischenschicht

- (5): Projektor
- (6): Betrachter / Fahrzeugfahrer

- (O): Oberkante der Windschutzscheibe 1
- (U): Unterkante der Windschutzscheibe 1

- (B): HUD-Bereich der Windschutzscheibe 1
- (BO): Oberkante des HUD-Bereichs B
- (BU): Unterkante des HUD-Bereichs B

- α: Keilwinkel der Zwischenschicht 4
- R: vertikaler Krümmungsradius der Windschutzscheibe 1

- (V): vertikaler Verlauf des Krümmungsradius R zwischen Oberkante O und Unterkante U
- (V'): Abschnitt von V zwischen Oberkante O der Windschutzscheibe 1 und Unterkante BU

- (E): Eyebox
- (M): Mittenstrahl (zwischen Projektor 5 und Mitte der Eyebox E)
- (G): HUD-Referenzpunkt

## Patentansprüche

1. Projektionsanordnung für ein Head-Up-Display (HUD), mindestens umfassend
- eine Fahrzeug-Windschutzscheibe (1), umfassend eine Außenscheibe (2) und eine Innenscheibe (3), die über eine thermoplastische Zwischenschicht (4) miteinander verbunden sind, mit einer Oberkante (O) und einer Unterkante (U) und einem durch einen Projektor (5) bestrahlbaren HUD-Bereich (B), wobei die Fahrzeug-Windschutzscheibe (1) einen Einbauwinkel im Bereich von 55° bis 75° aufweist, und wobei die Außenscheibe (2) und die Innenscheibe (3) jeweils eine Dicke von maximal 5 mm aufweisen; und
- einen Projektor (5), der auf den HUD-Bereich (B) gerichtet ist und ein virtuelles Bild erzeugt, das ein innerhalb einer Eyebox (E) befindlicher Betrachter (6) wahrnehmen kann, wobei
- die Windschutzscheibe (1) einen HUD-Referenzpunkt (G) aufweist, an dem ein zwischen Projektor (5) und Mitte der Eyebox (E) verlaufender Mittenstrahl (M) auf die Innenscheibe (3) trifft,
- die Dicke der thermoplastischen Zwischenschicht (4) im vertikalen Verlauf zwischen der Oberkante (O) und der Unterkante (U) zumindest abschnittsweise veränderlich ist mit einem Keilwinkel (α), wobei der Keilwinkel (α) zumindest im HUD-Bereich (B) veränderlich ist,
- die Windschutzscheibe (1) einen vertikalen Krümmungsradius (R) aufweist, welcher im vertikalen Verlauf (V) zwischen der Oberkante (O) und der Unterkante (U) durch den HUD-Referenzpunkt (G) veränderlich ist,
wobei das Maximum des vertikalen Krümmungsradius (R) in dem Abschnitt (V') des Verlaufs (V) zwischen der Oberkante (O) der Windschutzscheibe (1) und der Unterkante (BU) des HUD-Bereichs (B) oberhalb des HUD-Referenzpunkt (G) befindlich ist,
wobei der vertikale Krümmungsradius (R) an der Oberkante (BO) des HUD-Bereichs (B) größer ist als an der Unterkante (BU) des HUD-Bereichs (B) und zwischen der Oberkante (BO) und der Unterkante (BU) monoton abnimmt.

2. Projektionsanordnung nach Anspruch 1, wobei das Maximum des vertikalen Krümmungsradius (R) oberhalb des HUD-Bereichs (B) befindlich ist.

3. Projektionsanordnung nach einem der Ansprüche 1 bis 2, wobei das Maximum des vertikalen Krümmungsradius (R) an oder oberhalb der oberen Kante des A-Sichtfelds gemäß ECE-R43 befindlich ist.

4. Projektionsanordnung nach einem der Ansprüche 1 bis 3, wobei das Maximum des vertikalen Krümmungsradius (R) im gesamten vertikalen Verlauf (V) zwischen der Oberkante (O) der Windschutzscheibe (1) und der Unterkante (U) der Windschutzscheibe (1) oberhalb des HUD-Referenzpunkt (G) befindlich ist.

5. Projektionsanordnung nach einem der Ansprüche 1 bis 4, wobei der Keilwinkel (α) im vertikalen Verlauf von der Oberkante (BO) des HUD-Bereichs (B) zur Unterkante (BU) des HUD-Bereichs (B) monoton zunimmt.

6. Projektionsanordnung nach einem der Ansprüche 1 bis 5, wobei der Keilwinkel (α) im HUD-Bereich (B) von 0,05 mrad bis 2 mrad, bevorzugt von 0,1 mrad bis 1 mrad beträgt.

7. Projektionsanordnung nach einem der Ansprüche 1 bis 6, wobei der vertikale Krümmungsradius (R) im HUD-Bereich (B) von 6 m bis 10 m beträgt, bevorzugt von 7 m bis 9 m.

8. Projektionsanordnung nach einem der Ansprüche 1 bis 7, wobei die vertikalen Krümmungsradien (R) der gesamten Windschutzscheibe (1) von 1 m bis 20 m betragen, bevorzugt von 2 m bis 15 m.

9. Projektionsanordnung nach einem der Ansprüche 1 bis 8, wobei die Außenscheibe (2) und die Innenscheibe (3) Kalk-Natron-Glas enthalten und eine Dicke von 0,8 mm bis 5 mm aufweisen, bevorzugt von 1,4 mm bis 2,5 mm.

10. Projektionsanordnung nach einem der Ansprüche 1 bis 9, wobei die Zwischenschicht (4) zumindest Polyvinylbutyral (PVB), Ethylenvinylacetat (EVA), Polyurethan (PU) oder Gemische oder Copolymere oder Derivate davon enthält, bevorzugt PVB, und eine minimale Dicke von 0,2 mm bis 2 mm, bevorzugt von 0,3 mm bis 1 mm aufweist.

11. Projektionsanordnung nach einem der Ansprüche 1 bis 10, wobei die Zwischenschicht (4) als geräuschdämpfende, mehrlagige Folie ausgebildet ist.

12. Verfahren zur Herstellung einer Projektionsanordnung für ein Head-Up-Display (HUD) nach einem der Ansprüche 1 bis 11, umfassend
- eine Fahrzeug-Windschutzscheibe (1), enthaltend eine Außenscheibe (2) und eine Innenscheibe (3), die über eine thermoplastische Zwischenschicht (4) miteinander verbunden sind, mit einer Oberkante (O) und einer Unterkante (U) und einem durch einen Projektor (5) bestrahlbaren HUD-Bereich (B), wobei die Dicke der thermoplastischen Zwischenschicht (4) im vertikalen Verlauf zwischen der Oberkante (O) und der Unterkante (U) zumindest abschnittsweise veränderlich ist mit einem Keilwinkel (α), wobei der Keilwinkel (α) zumindest im HUD-Bereich (B) veränderlich ist; und
- einen Projektor (5), der auf den HUD-Bereich (B) gerichtet ist und ein virtuelles Bild erzeugt, das ein innerhalb einer Eyebox (E) befindlicher Betrachter (6) wahrnehmen kann;
wobei das Verfahren mindestens die folgenden Verfahrensschritte umfasst:
(a) Ermittlung eines HUD-Referenzpunkts (G), an dem ein zwischen Projektor (5) und Mitte der Eyebox (E) verlaufende Mittenstrahl (M) auf die Innenscheibe (3) trifft, aus der geplanten relativen Anordnung von Windschutzschutzscheibe (1), Projektor (5) und Eyebox (E);
(b) Erstellung eines Profils des vertikalen Krümmungsradius (R), welcher im vertikalen Verlauf (V) zwischen der Oberkante (O) und der Unterkante (U) durch den HUD-Referenzpunkt (G) veränderlich ist, so dass das Maximum des vertikalen Krümmungsradius (R) in dem Abschnitt (V') des Verlaufs (V) zwischen der Unterkante (BU) des HUD-Bereichs (B) und der Oberkante (O) der Windschutzscheibe (1) oberhalb des HUD-Referenzpunkt (G) befindlich ist;
(c) Herstellen der Windschutzscheibe (1) mit dem Keilwinkel (α) und dem ermittelten Verlauf des vertikalen Krümmungsradius (R);
(d) relatives Anordnen von Windschutzscheibe (1) und Projektor (5), wobei die Projektionsanordnung entsteht.

13. Verwendung der Projektionsanordnung nach einem der Ansprüche 1 bis 11 in einem Fahrzeug als Head-Up-Display (HUD), bevorzugt in einem Kraftfahrzeug, besonders bevorzugt in einem Personenkraftwagen.

## Claims

1. Projection arrangement for a head-up display (HUD), at least comprising
- a vehicle windshield (1), comprising an outer pane (2) and an inner pane (3), which are bonded to one another via a thermoplastic intermediate layer (4), with an upper edge (O) and a lower edge (U) and an HUD region (B) which can be irradiated by a projector (5), wherein the vehicle windshield (1) has an installation angle in the range from 55° to 75°, and wherein the outer pane (2) and the inner pane (3) have in each case a thickness of a maximum of 5 mm; and
- a projector (5), which is aimed at the HUD region (B) and generates a virtual image, which an observer (6) situated within an eyebox (E) can perceive,
wherein
- the windshield (1) has an HUD reference point (G), at which a central beam (M) running between the projector (5) and the center of the eyebox (E) strikes the inner pane (3),
- the thickness of the thermoplastic intermediate layer (4) in the vertical course between the upper edge (O) and the lower edge (U) is variable at least in sections with a wedge angle (α), wherein the wedge angle (α) is variable at least in the HUD region (B),
- the windshield (1) has a vertical radius of curvature (R), which is variable in the vertical course (V) between the upper edge (O) and the lower edge (U) through the HUD reference point (G),
wherein the maximum of the vertical radius of curvature (R) is situated in the section (V') of the course (V) between the upper edge (O) of the windshield (1) and the lower edge (BU) of the HUD region (B) above the HUD reference point (G),
wherein the vertical radius of curvature (R) at the upper edge (BO) of the HUD region (B) is greater than at the lower edge (BU) of the HUD region (B) and decreases monotonically between the upper edge (BO) and the lower edge (BU).

2. Projection arrangement according to claim 1, wherein the maximum of the vertical radius of curvature (R) is situated above the HUD region (B).

3. Projection arrangement according to one of claims 1 through 2, wherein the maximum of the vertical radius of curvature (R) is situated at or above the upper edge of the A field of view per ECE-R43.

4. Projection arrangement according to one of claims 1 through 3, wherein the maximum of the vertical radius of curvature (R) in the entire vertical course (V) between the upper edge (O) of the windshield (1) and the lower edge (U) of the windshield (1) is situated above the HUD reference point (G).

5. Projection arrangement according to one of claims 1 through 4, wherein the wedge angle (α) increases monotonically in the vertical course from the upper edge (BO) of the HUD region (B) to the lower edge (BU) of the HUD region (B).

6. Projection arrangement according to one of claims 1 through 5, wherein the wedge angle (α) in the HUD region (B) is from 0.05 mrad to 2 mrad, preferably from 0.1 mrad to 1 mrad.

7. Projection arrangement according to one of claims 1 through 6, wherein the vertical radius of curvature (R) in the HUD region (B) is from 6 m to 10 m, preferably from 7 m to 9 m.

8. Projection arrangement according to one of claims 1 through 7, wherein the vertical radii of curvature (R) of the entire windshield (1) are from 1 m to 20 m, preferably from 2 m to 15 m.

9. Projection arrangement according to one of claims 1 through 8, wherein the outer pane (2) and the inner pane (3) contain soda lime glass and have a thickness from 0.8 mm to 5 mm, preferably from 1.4 mm to 2.5 mm.

10. Projection arrangement according to one of claims 1 through 9, wherein the intermediate layer (4) contains at least polyvinyl butyral (PVB), ethylene vinyl acetate (EVA), polyurethane (PU), or mixtures or copolymers or derivatives thereof, preferably PVB, and has a minimum thickness from 0.2 mm to 2 mm, preferably from 0.3 mm to 1 mm.

11. Projection arrangement according to one of claims 1 through 10, wherein the intermediate layer (4) is implemented as a noise-damping, multilayer film.

12. Method for producing a projection arrangement for a head-up display (HUD) according to one of claims 1 through 11, comprising
- a vehicle windshield (1), including an outer pane (2) and an inner pane (3), which are bonded to one another via a thermoplastic intermediate layer (4), with an upper edge (O) and a lower edge (U) and an HUD region (B) which can be irradiated by a projector (5), wherein the thickness of the thermoplastic intermediate layer (4) in the vertical course between the upper edge (O) and the lower edge (U) is variable at least in sections with a wedge angle (α), wherein the wedge angle (α) is variable at least in the HUD region (B); and
- a projector (5), which is aimed at the HUD region (B) and generates a virtual image, which an observer (6) within an eyebox (E) can perceive;
wherein the method comprises at least the following process steps:
(a) calculating an HUD reference point (G), at which a central beam (M) running between the projector (5) and the center of the eyebox (E) strikes the inner pane (3), from the planned relative arrangement of the windshield (1), the projector (5), and the eyebox (E);
(b) creating a profile of the vertical radius of curvature (R), which is variable in the vertical course (V) between the upper edge (O) and the edge (U) through the HUD reference point (G) such that the maximum of the vertical radius of curvature (R) in the section (V') of the course (V) between the lower edge (BU) of the HUD region (B) and the upper edge (O) of the windshield (1) is situated above the HUD reference point (G);
(c) producing the windshield (1) with the wedge angle (α) and the calculated vertical radius of curvature (R);
(d) relative arrangement of the windshield (1) and the projector (5), wherein the projection arrangement is created.

13. Use of the projection arrangement according to one of claims 1 through 11 in a vehicle as a head-up display (HUD), preferably in a motor vehicle, particularly preferably in an automobile.

## Revendications

1. Dispositif de projection pour un affichage tête haute (HUD), comprenant au moins
- un pare-brise de véhicule (1), comprenant une vitre extérieure (2) et une vitre intérieure (3), qui sont liées l'une à l'autre par une couche intermédiaire thermoplastique (4), avec un bord supérieur (O) et un bord inférieur (U) et une zone HUD (B) qui peut être irradiée par un projecteur (5), dans lequel le pare-brise de véhicule (1) présente un angle d'installation compris entre 55° et 75°, et dans lequel la vitre extérieure (2) et la vitre intérieure (3) présentent chacune une épaisseur maximale de 5 mm; et
- un projecteur (5), qui est dirigé vers la zone HUD (B) et génère une image virtuelle, qu'un observateur (6) situé à l'intérieur d'une boîte oculaire (E) peut percevoir,
dans lequel
- le pare-brise (1) a un point de référence HUD (G), au niveau duquel un faisceau central (M) s'étendant entre le projecteur (5) et le centre de la boîte à yeux (E) frappe la vitre intérieure (3),
- l'épaisseur de la couche intermédiaire thermoplastique (4) dans le tracé vertical entre le bord supérieur (O) et le bord inférieur (U) est variable au moins dans les sections avec un angle de calage (α), l'angle de calage (α) étant variable au moins dans la région HUD (B),
- le pare-brise (1) a un rayon de courbure vertical (R), qui est variable dans la course verticale (V) entre le bord supérieur (O) et le bord inférieur (U) en passant par le point de référence HUD (G),
dans lequel le maximum du rayon de courbure vertical (R) est situé dans la section (V') du parcours (V) entre le bord supérieur (O) du pare-brise (1) et le bord inférieur (BU) de la région HUD (B) au-dessus du point de référence HUD (G),
dans lequel le rayon de courbure vertical (R) au niveau du bord supérieur (BO) de la région HUD (B) est plus grand qu'au niveau du bord inférieur (BU) de la région HUD (B) et diminue de façon monotone entre le bord supérieur (BO) et le bord inférieur (BU).

2. Dispositif de projection selon la revendication 1, dans lequel le maximum du rayon de courbure vertical (R) est situé au-dessus de la région HUD (B).

3. Dispositif de projection selon l'une des revendications 1 à 2, dans lequel le maximum du rayon de courbure vertical (R) est situé au niveau ou au-dessus du bord supérieur du champ de vision A selon la norme ECE-R43.

4. Dispositif de projection selon l'une des revendications 1 à 3, dans lequel le maximum du rayon de courbure vertical (R) sur toute la course verticale (V) entre le bord supérieur (O) du pare-brise (1) et le bord inférieur (U) du pare-brise (1) est situé au-dessus du point de référence HUD (G).

5. Dispositif de projection selon l'une des revendications 1 à 4, dans lequel l'angle de calage (α) augmente de manière monotone sur le parcours vertical entre le bord supérieur (BO) de la région HUD (B) et le bord inférieur (BU) de la région HUD (B).

6. Dispositif de projection selon l'une des revendications 1 à 5, dans lequel l'angle de coin (α) dans la région HUD (B) est compris entre 0,05 mrad et 2 mrad, de préférence entre 0,1 mrad et 1 mrad.

7. Dispositif de projection selon l'une des revendications 1 à 6, dans lequel le rayon de courbure vertical (R) dans la région HUD (B) est compris entre 6 m et 10 m, de préférence entre 7 m et 9 m.

8. Dispositif de projection selon l'une des revendications 1 à 7, dans lequel les rayons de courbure verticaux (R) de l'ensemble du pare-brise (1) sont compris entre 1 m et 20 m, de préférence entre 2 m et 15 m.

9. Dispositif de projection selon l'une des revendications 1 à 8, dans lequel la vitre extérieure (2) et la vitre intérieure (3) contiennent du verre sodocalcique et ont une épaisseur de 0,8 mm à 5 mm, de préférence de 1,4 mm à 2,5 mm.

10. Dispositif de projection selon l'une des revendications 1 à 9, dans lequel la couche intermédiaire (4) contient au moins du butyral de polyvinyle (PVB), de l'éthylène vinyle acétate (EVA), du polyuréthane (PU), ou des mélanges ou copolymères ou dérivés de ceux-ci, de préférence du PVB, et présente une épaisseur minimale de 0,2 mm à 2 mm, de préférence de 0,3 mm à 1 mm.

11. Dispositif de projection selon l'une des revendications 1 à 10, dans lequel la couche intermédiaire (4) est mise en œuvre sous la forme d'un film multicouche amortissant le bruit.

12. Procédé de réalisation d'un dispositif de projection pour un affichage tête haute (HUD) selon l'une des revendications 1 à 11, comprenant
- un pare-brise de véhicule (1), comprenant une vitre extérieure (2) et une vitre intérieure (3), qui sont collées l'une à l'autre par l'intermédiaire d'une couche intermédiaire thermoplastique (4), avec un bord supérieur (O) et un bord inférieur (U) et une zone HUD (B) qui peut être irradiée par un projecteur (5), dans lequel l'épaisseur de la couche intermédiaire thermoplastique (4) dans le tracé vertical entre le bord supérieur (O) et le bord inférieur (U) est variable au moins par sections avec un angle de coin (α), l'angle de coin (α) étant variable au moins dans la zone HUD (B); et
- un projecteur (5), qui est dirigé vers la région HUD (B) et génère une image virtuelle, qu'un observateur (6) à l'intérieur d'une boîte oculaire (E) peut percevoir;
dans lequel le procédé comprend au moins les étapes de traitement suivantes :
(a) calcul d'un point de référence HUD (G), auquel un faisceau central (M) s'étendant entre le projecteur (5) et le centre de l'oeil (E) frappe la vitre intérieure (3), à partir de la disposition relative prévue du pare-brise (1), du projecteur (5) et de l'oeil (E);
(b) création d'un profil du rayon de courbure vertical (R), qui est variable dans le tracé vertical (V) entre le bord supérieur (O) et le bord (U) en passant par le point de référence HUD (G), de telle sorte que le maximum du rayon de courbure vertical (R) dans la section (V') du tracé (V) entre le bord inférieur (BU) de la zone HUD (B) et le bord supérieur (O) du pare-brise (1) se trouve au-dessus du point de référence HUD (G);
(c) production du pare-brise (1) avec l'angle de calage (α) et le rayon de courbure vertical calculé (R);
(d) arrangement relatif du pare-brise (1) et du projecteur (5), dans lequel l'arrangement de projection est créé.

13. Utilisation de l'agencement de projection selon l'une des revendications 1 à 11 dans un véhicule en tant qu'affichage tête haute (HUD), de préférence dans un véhicule automobile, plus particulièrement dans une automobile.
